# EUROPÄISCHE PATENTSCHRIFT

(11) **EP 0 684 211 B1**
(45) Veröffentlichungstag und Bekanntmachung des Hinweises auf die Patenterteilung: **02.07.1997**
(21) Anmeldenummer: 95101873.8
(22) Anmeldetag: 11.02.1995
(51) Int. Cl.: C03B 19/14, C03B 19/06, C03B 19/08

(54) **Verfahren und Vorrichtung zur Herstellung von Platten aus Quarzglas**
Process and apparatus for manufacturing quartz glass sheets
Procédé et appareil pour la fabrication des feuilles de verre de quartz

(30) Priorität: 26.05.1994 DE 4418401
(43) Veröffentlichungstag der Anmeldung: 29.11.1995
(73) Patentinhaber: Heraeus Quarzglas GmbH, D-63450 Hanau (DE)
(72) Erfinder: Christiansen, Uwe, D-63571 Gelnhausen (DE); Steinkohl, Anton, D-63584 Gründau (DE)
(74) Vertreter: Staudt, Armin Walter

(56) Entgegenhaltungen:
- DE-C- 545 682
- US-A- 3 473 904
- US-A- 4 363 647
- PATENT ABSTRACTS OF JAPAN vol. 15 no. 403 (C-875) ,15.Oktober 1991 & JP-A-03 164438 (NIPPON SHEET GLASS CO. LTD.) 16.Juli 1991,
- DATABASE WPI Section Ch, Week 7729 Derwent Publications Ltd., London, GB; Class L01, AN 77-51347Y & JP-A-52 069 423 (TOYO GLASS CO. LTD.) , 9.Juni 1977

## Beschreibung

Die Erfindung betrifft ein Verfahren zur kontinuierlichen Herstellung von Platten aus Quarzglas oder hochkieselsäurehaltigem Glas durch kontinuierliches Aufbringen einer Schicht aus Quarzglas-Soot auf einer Unterlage und Sintern der Schicht durch kontinuierliches Einbringen in eine Erhitzungszone unter Bildung eines Quarzglasbandes. Weiterhin betrifft die Erfindung eine Vorrichtung für die kontinuierliche Herstellung von Platten aus Quarzglas oder hochkieselsäurehaltigem Glas, mit einer für den Transport von Quarzglaskörnung geeigneten Transportvorrichtung mit einer Aufsprühvorrichtung zum Erzeugen einer Schicht aus Quarzglas-Soot auf einer Schicht aus Quarzglaskörnung, und mit einer Heizvorrichtung zum Erhitzen der Schicht

Ein Verfahren und eine Vorrichtung gemäß der eingangs genannten Gattung sind aus der US-PS 4,363,647 bekannt. Auf einem Trägerkörper, beispielsweise aus vorgesintertem, verglastem Sand oder aus hochreinem Quarzglas, wird eine plane Schicht aus Quarzglas-Soot mittels einer Reihe von Hydrolysebrennern kontinuierlich abgeschieden und anschließend unter Erzeugung einer Quarzglasplatte mittels eines Bandbrenners verglast. Die Soot-Schicht kann über ihre gesamte Dicke verglast werden. Dabei verschmilzt sie mit dem Trägerkörper. Mit dem bekannten Verfahren ist es daher möglich, TiO₂-haltige Druckspannungsschichten auf Glasplatten zu erzeugen. Der Trägerkörper kann auch mechanisch wieder entfernt werden, was jedoch aufwendig und besonders bei dünnen Glasschichten sehr problematisch ist. Soll die Soot-Schicht nicht mit dem Trägerkörper verschmelzen, muß die Wärmezufuhr gestoppt werden, bevor die Schmelzfront den Trägerkörper erreicht. Die Schmelzfront ist aber nicht eben. Ihr Fortschreiten hängt von der lokalen Dichte der Soot-Schicht und von der lokalen Heizleistung ab. Wird die Wärmezufuhr gestoppt bevor die Soot-Schicht vollkommen durchgeschmolzen ist, entstehen daher zwangsläufig Bereiche mit unverglastem Soot und damit eine unebene, wenn auch vom Trägerkörper leicht lösbare, Glasplatte.

Es ist bekannt, Plattenmaterial aus Quarzglasblöcken, welche mit hohem Energieaufwand und Kosten hergestellt werden, in Form von Scheiben herauszusägen. Nach einer Nachbehandlung der Schnittflächen genügen die so hergestellten Platten hohen Anforderungen hinsichtlich Oberflächengüte und Planheit. Die für das Sägen geeigneten Schneidwerkzeuge sind aber sehr teuer. Das Herstellen der Blöcke und das Sägen selbst ist mit hohem Zeitaufwand und mit Materialverlusten verbunden. Die Materialverluste sind um so höher, je dünner die herausgesägten Platten sind.

Aus der Druckschrift GB-A2 184 434 ist ein Verfahren zur Herstellung von Quarzglasplatten bekannt, bei dem ein Quarzglasrohr in Längsrichtung aufgeschlitzt, anschließend erweicht und dabei zu einer Platte geformt wird. Die so hergestellten Platten sind jedoch nicht eben. Kleinere Vertiefungen und Erhöhungen bleiben nach der Umformung erhalten.

Ein weiteres Verfahren zur Herstellung von Platten aus Quarzglas sowie eine Vorrichtung zur Durchführung des Verfahrens sind aus der DE-A1 32 26 451 bekannt. Hier wird ein Vollzylinder aus Quarzglas in einen Ofen abgesenkt, wo er durch Erhitzen auf Temperaturen auf 1700°C - 1900°C in einen Graphittiegel ausfließt. Nach dem Abkühlen kann das ausgeflossene Quarzglas als Platte dem Graphittiegel entnommen werden. Die so hergestellte Platte zeichnet sich durch hohe optische Homogenität aus. Der Herstellvorgang ist aber sehr zeit- und energieaufwendig.

Die vorgenannten Verfahren erfordern sämtlich die Herstellung von Vorkörpern, aus denen dann die Platten aufwendig geformt werden müssen. Aus der DE-PS 15 35 03 ist ein Verfahren zur Herstellung von Formstücken, wie beispielsweise Quarzglasplatten bekannt, bei dem Quarzsand auf einer Unterlage, beispielsweise aus Quarzsand, aufgestreut und anschließend mit dem Lichtbogen Punkt für Punkt aufgeschmolzen wird. Dadurch entstehen zusammenhängende Bereiche von Quarzglassand in Form einer Platte, die jedoch eine sehr schlechte optische Qualität aufweist.

Aus dem Patent-Abstract zur JP-A 4-55331 (Patents Abstracts of Japan C-948, June 8, 1992, Vol. 16/No. 249) ist die chargenweise Herstellung von SiO₂-Glasscheiben bekannt. Dabei wird gekörntes Quarzglas durch Trennlagen aus porösen SiO₂-Körpern voneinander getrennt, übereinandergestapelt, und gesintert. Durch die Trennlagen soll ein Verschmelzen der Quarzglasschichten vermieden und die Entgasung aus den gekörnten Quarzglasschichten erleichtert werden. Durch das Gewicht der darüberliegenden Lagen werden die unteren Quarzglaskörnungsschichten jedoch verdichtet und sintern dadurch schneller. Dadurch besteht die Gefahr, daß die unteren Trennlagen mit der dazwischenliegenden Quarzglaskörnung zu einem homogenen Block zusammensintern, während die oberen Schichten noch nicht durchgesintert sind.

Der vorliegenden Erfindung liegt die Aufgabe zugrunde, ein Verfahren anzugeben, mittels dem Platten aus Quarzglas von hoher optischer Qualität kostengünstig hergestellt werden können, sowie eine Vorrichtung zur Herstellung derartiger Platten bereitzustellen.

Hinsichtlich des Verfahrens wird diese Aufgabe ausgehend von dem eingangs genannten Verfahren erfindungsgemäß dadurch gelöst, daß als Unterlage eine rieselfähige Quarzglaskörnung eingesetzt wird, die eine geringere Sinteraktivität als der Quarzglas-Soot aufweist.

Das kontinuierliche Aufbringen einer Schicht aus Quarzglas-Soot und das kontinuierliche Einbringen dieser Schicht in eine Erhitzungszone ergibt eine wirtschaftliche, kontinuierliche Verfahrensweise für die Herstellung von Quarzglaspatten. Dabei gewährleistet die Verwendung einer Quarzglaskörnung als Unterlage für den Quarzglas-Soot eine gute thermische Isolierung des amorphen Soots beim Sintern und sie verhindert ein Anhaften des gesinterten Quarzglasbandes auf seiner Unterlage. Gleichzeitig wird ein Eindiffundieren von atomaren Verunreinigungen, welche aus der Unterlage entweichen könnten, verhindert.

Dadurch, daß die Quarzglaskömung eine im Vergleich zum Quarzglas-Soot geringere Sinteraktivität aufweist, wird ein Sintern der Schicht ermöglicht, das nur den Quarzglas-Soot, jedoch nicht oder nur in geringem Umfang die Unterlage erfaßt. Unterschiede in der Sinteraktivität ergeben sich bei gleicher chemischer Zusammensetzung von Soot und Körnung beispielsweise durch unterschiedliche Partikelgrößen oder durch unterschiedliche Anteile an kristalliner Phase in den Partikeln.

Das erfindungsgemäße Verfahren hat sich als besonders geeignet zur kontinuierlichen Herstellung von Platten aus synthetischem Quarzglas oder hochkieselsäurehaltigem Glas erwiesen, wobei eine Schicht aus synthetisch hergestelltem Quarzglas-Soot auf einer Unterlage aus Quarzglaskörnung aus vorgesintertem, synthetischem Quarzglas-Soot aufgebracht wird. Aufgrund seiner geringen mittleren Partikelgröße weist synthetisch hergestellter amorpher Quarzglas-Soot im allgemeinen eine sehr hohe Sinteraktivität auf. Eine Schicht aus derartig amorphdispersem Quarzglas-Soot zieht sich beim Sintern zusammen. Das Anhaften des Quarzglas-Soots an der Unterlage aus Quarzglaskörnung verhindert aber eine Kontraktion der Schicht in deren seitlichen Abmessungen. Dadurch nimmt im wesentlichen nur die Dicke der Schicht beim Sintern ab.

Eine verminderte Sinteraktivität der Quarzglaskörnung ergibt sich vorteilhaft durch das Vorsintern von synthetischem Quarzglas-Soot unter Erzeugung einer gegenüber diesem verkleinerten spezifischen Oberfläche und einer vergrößerten mittleren Partikelgröße. Dabei haben sich Partikelgrößenverteilungen im Bereich von 30 bis 350 µm als günstig erwiesen. Bei kleineren Partikelgrößen der Quarzglaskörnung besteht die Gefahr des Ansinterns des amorphen Quarzglas-Soots auf der Unterlage; bei größeren mittleren Partikelgrößen ist die Haftung der Quarzglaspulver-Schicht auf der Unterlage nicht ausreichend. Die Schichtdicke der Quarzglaskörnung wird dabei vorteilhaft im Bereich zwischen 40 mm und 80 mm eingestellt.

Im Hinblick auf optische Blasenfreiheit und Reinheit der herzustellenden Platten ist es vorteilhaft, Quarzglaskörnung einzusetzen, die die gleiche chemische Zusammensetzung wie das Quarzglas aufweist.

Besonders wirtschaftlich gestaltet sich das Verfahren, wenn die Schicht auf der Quarzglaskörnung unmittelbar mittels einer Gasphasenreaktion abgeschieden wird. Dies kann besonders einfach mittels eines oder mehrerer Hydrolysebrenner erfolgen, die zur Abscheidung einer gleichmäßig dicken Schicht aus amorpher Kieselsäure über der Unterlage hin-und herbewegt werden.

Dabei hat es sich als günstig erwiesen, den Quarzglas-Soot während des Aufbringens auf eine Temperatur im Bereich von 1000 °C bis 1250 °C zu erhitzen, so daß die Schicht leicht angesintert ist. Die amorphe Kieselsäureschicht wird dadurch verfestigt und ist besser handhabbar. So lassen sich beispielsweise Abgase, die beim Aufbringen der Schicht enstehen können, absaugen, ohne daß die feinen Partikel der amorphen Kieselsäure mitgerissen werden. Beim Aufbringen der Schicht mittels Hydrolysebrenner kann das Ansintern besonders einfach durch die Reaktionswärme der Brennergase erfolgen.

Vorteilhafterweise wird die Quarzglaskörnung kontinuierlich auf ein Förderband aufgebracht. Nach dem Durchlaufen der Erhitzungszone kann die Quarzglaskörnung von dem Förderband wieder entnommen und als Unterlage erneut eingesetzt werden.

Die Sintertemperaturen in der Erhitzungszone richten sich unter anderem nach der Durchlaufgeschwindigkeit der Schicht durch die Erhitzungszone und nach der Dicke der Soot-Schicht.

Die mittlere Verweildauer jedes Punktes der Schicht in der Erhitzungszone beträgt ca. 1 h. Die Dicken der Soot-Schichten liegen üblicherweise im Bereich zwischen 10 mm und 30 mm. Unter diesen Voraussetzungen haben sich Sintertemperaturen im Bereich zwischen 1300° C und 1600° C als günstig erwiesen.

Die Schicht liegt nach dem Verlassen der Erhitzungszone als verglastes Quarzglasband vor, das leicht in plattenförmige Einzelelemente zerteilt werden kann. Mit dem erfindungsgemäßen Verfahren sind Plattenstärken bis zu ca. 10 mm herstellbar.

Hinsichtlich der Vorrichtung wird die oben genannte Aufgabe ausgehend von der eingangs beschriebenen Vorrichtung erfindungsgemäß dadurch gelöst, daß eine Aufgabevorrichtung zum schichtweisen Aufbringen der Quarzglaskörnung auf der Transportvorrichtung vorgesehen ist.

Die erfindungsgemäße Transportvorrichtung ermöglicht eine kontinuierliche Arbeitsweise der Vorrichtung. Als besonders geeignet hierfür hat sich eine Transportvorrichtung erwiesen, die ein Förderband oder eine Röllchenbahn umfaßt, das bzw. die mit hitzebeständigen Plattenelementen belegt ist. Das Förderband oder die Röllchenbahn besteht vorteilhafterweise aus einem hitzbeständigen Material wie Al₂O₃ oder Graphit. Aus diesen Werkstoffen bestehen vorteilhafterweise auch die Plattenelemente. Sie schützen das Förderband vor Verschleiß und sind bei Bedarf leicht austauschbar. Es wird eine Ausführungsform der Vorrichtung bevorzugt, bei der benachbarte Plattenelemente derart miteinander verbunden sind, daß sie, abgesehen von einem kleinen Spalt zwischen ihnen, eine geschlossene Fläche bilden. Auf dieser kann die Quarzglaskörnung aufgebracht werden, ohne daß sie zwischen den Plattenelementen hindurchrieselt.

Eine besonders einfache kontinuierliche Verfahrensweise ergibt sich bei einer Vorrichtung, bei der aneinander grenzende Enden der Plattenelemente hakenförmig ineinander greifen. Derartig tig gestaltete Plattenelemente können unter Ausbildung einer nahezu geschlossenen, zusammenhängenden Fläche nacheinander auf das umlaufende Förderband aufgelegt werden. Nach dem Austritt aus der Heizvorrichtung können sie auch einzeln nacheinander abgesenkt, gereinigt und wieder zum Belegen des Förderbandes verwendet werden.

Besonders vorteilhaft im Hinblick auf eine kontinuierliche Arbeitsweise der Vorrichtung ist es, die Aufsprühvorrichtung mit mindestens einem, in mindestens einer Richtung über der Quarzglaskörnung hin- und herbewegbaren Hydrolysebrenner auszubilden. Mit diesem kann auf der Quarzglaskörnung unmittelbar eine Schicht aus pyrogenem Quarzglas-Soot abgeschieden werden. Besonders effektiv und kostengünstig arbeitet eine Vorrichtung, bei der mehrere Hydrolysebrenner auf einem oder auf mehreren Auslegern angeordnet sind, die in einer Richtung quer zur Bewegungsrichtung der Transportvorrichtung hin- und her bewegbar sind, so daß auch die Hydrolysebrenner diese Bewegung, unter Abscheidung einer Soot-Schicht auf der Quarzglaskörnung, ausführen. Dabei sind vorteilhafterweise der oder die Ausleger zur Zuführung für die Reaktionsgase zu den Hydrolysebrennern ausgebildet.

Es wird eine Vorrichtung bevorzugt, bei der die Heizvorrichtung in Form einer nach unten offenen Sinterkammer, die sich über die gesamte Breite der Soot-Schicht erstreckt, ausgebildet und mit einer elektrischen Widerstandsheizung versehen ist. Dadurch wird ein gleichmäßiges Verglasen der Schicht über deren gesamte Breite erreicht. Außerdem gewährleistet die Sinterkammer, daß jeder Punkt der Soot-Schicht für die Dauer des Durchlaufes durch die Sinterkammer auf etwa gleicher Temperatur bleibt. Diese Temperatur kann im Vergleich zur punktförmigen Erhitzung aufgrund der längeren Dauer des Erhitzens in der Sinterkammer niedriger sein. Dadurch wird eine homogene und schonende Verglasung erreicht.

Ein Ausführungsbeispiel des erfindungsgemäßen Verfahrens sowie der erfindungsgemäßen Vorrichtung ist in der Zeichnung dargestellt und wird nachfolgend näher erläutert. In der Zeichnung zeigen im einzelnen.
- Fig. 1:: eine schematische Darstellung einer erfindungsgemäßen Vorrichtung in einer Seitenansicht und
- Fig. 2:: einen Schnitt durch eine Aufsprühkammer in einer Ansicht quer zur Bewegungsrichtung der Transportvorrichtung anhand einer schematischen Darstellung.

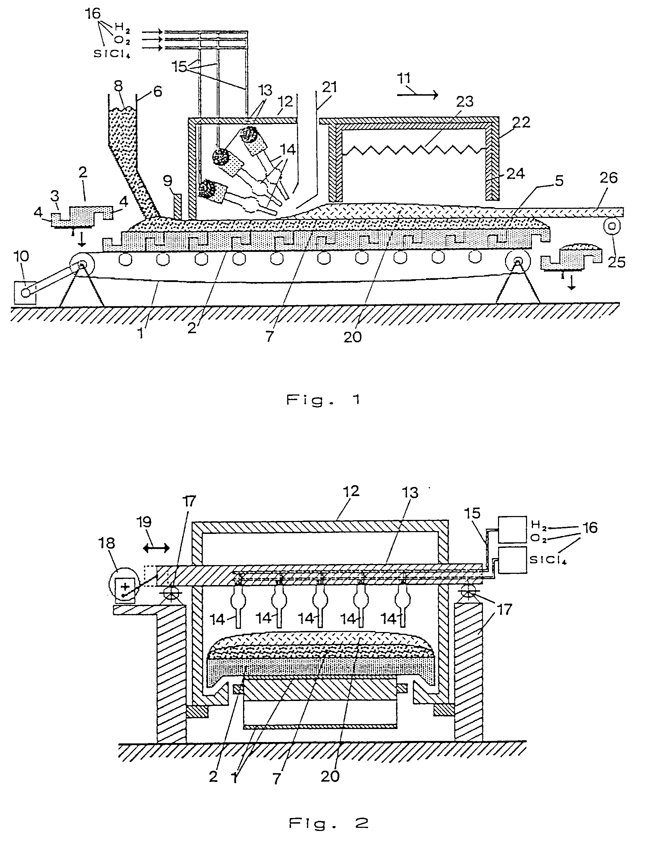

Bei der in Fig. 1 dargestellten Vorrichtung ist die Bezugsziffer 1 einem kettenähnlichen Förderband aus Al₂O₃ zugeordnet. Das Förderband ist mit temperaturfesten Plattenelementen 2 aus Al₂O₃ belegt, deren hakenförmige Enden 3 ineinandergreifen. Die Plattenelemente 2 stoßen dabei mit ihren Stirnseiten 4 so aneinander, daß sie, abgesehen von einem kleinen Spalt, eine geschlossene Auflagefläche 5 bilden.

Über der Auflagefläche 5 mündet ein Aufgabetrichter 6, mittels dem eine geschlossene Körnungsschicht 7 einer Quarzglaskörnung 8 aus pyrogener Kieselsäure auf der Auflagefläche 5 aufgebracht wird. Ein Abstreifer 9 sorgt für eine gleichmäßige Schichtdicke und Ebenheit der Körnungsschicht 7.

Das Förderband 1 ist mittels eines Antriebes 10 in der mit dem Richtungspfeil 11 bezeichneten Richtung bewegbar. Hierdurch gelangt die Körnungsschicht 7 in eine Aufsprühkammer 12. Dort sind mehrere, quer zur Förderrichtung 11 verlaufende Ausleger 13 angeordnet, die jeweils mit mehreren Hydrolysebrennern 14 ausgestattet sind. Die Ausleger 13 sind hohl, so daß sie als Fortführung für die Versorgungsleitungen 15 für die erforderlichen Brennergase 16, wie SiCl₄-Dampf, H₂ und O₂, dienen. Wie aus Fig. 2 ersichtlich ist, sind die Ausleger 13 beidseitig mit einer geeigneten Lagerung 17 versehen. Mittels eines Plungerantriebes 18 werden die Ausleger 13 in eine quer zur Förderrichtung 11 oszillierende Bewegung versetzt, wie sie anhand des Bewegungspfeiles 19 symbolisiert ist. Mittels der Hydrolysebrenner 14 wird auf der Körnungsschicht 7 eine Schicht 20 aus amorpher Kieselsäure abgeschieden.

Gegenüber den Hydrolysebrennern 14 ist ein Kamin 21 angeordnet, durch den die beim Abscheiden der Kieselsäureschicht 20 anfallenden Abgase sowie überschüssige amorphe Kieselsäure einer, nicht dargestellten, Reinigungsanlage zugeführt werden.

In Förderrichtung 11 gesehen folgt auf den Kamin 21 eine nach unten offene Sinterkammer 22, die mit einer elektrischen Widerstandsheizung 23 ausgestattet und mit Wänden 24 aus einem temperaturfesten Material ausgekleidet ist. Die Sinterkammer 22 gewährleistet eine gleichmäßige Erwärmung der Kieselsäureschicht 20 über deren gesamte Breite und eine konstante Sinter-Temperatur für jeden Punkt der Kieselsäureschicht 20 während des Durchlaufs durch die Sinterkammer 22. Das nach dem Durchlaufen der Sinterkammer 22 aus der amorphen Kieselsäureschicht 20 entstandene Quarzglasband wird auf Stützrollen 25 einer Schneidvorrichtung (nicht dargestellt) zugeführt.

Nachfolgend wird die Herstellung von Quarzglas-Platten gemäß dem erfindungsgemäßen Verfahren beispielhaft unter Verwendung der oben beschriebenen Vorrichtung beschrieben. Mittels des Aufgabetrichters 6 wird eine Körnungsschicht 7 aus pyrogen hergestellter und vorgesinterter Quarzglaskörung 8 auf dem mit einer Geschwindigkeit von ca. 1 m/h laufenden Förderband 1 aufgetragen. Mittels des Abstreifers 9 wird die Dicke der Körnungsschicht 7 auf ca. 60 mm eingestellt. In Förderrichtung 11 wird anschließend eine dünne Schicht 20 amorpher Kieselsäure mittels Hydrolysebrenner 14 auf die Körnungsschicht 7 abgeschieden. Weitere Brennerreihen verstärken diese Schicht 20 bis auf eine Dicke von 15 mm. Die reihenweise auf gemeinsamen Auslegern 13 angeordneten Hydrolysebrenner 14 sind schräg zur Oberfläche der Körnungsschicht 7 in Förderrichtung 11 gestellt. Ein gleichmäßiger Schichtaufbau wird dadurch erreicht, daß die Hydrolysebrenner 14 in eine oszillierende Bewegung 19 versetzt werden. Durch die Brennerwärme wird die Kieselsäureschicht 20 auf Temperaturen um 1100 °C erhitzt und dadurch leicht angesintert und verfestigt. Die bei der Abscheidung anfallenden Abgase werden aus der Aufsprühkammer 12 über den Kamin 21 abgesaugt. Die chemische Zusammensetzung der Quarzglaskörnung 8 ist die gleiche wie diejenige des als Schicht 20 abgeschiedenen amorphen Kieselsäureschicht.

Die so abgeschiedene amorphe Kieselsäureschicht 20 wird anschließend mittels des Förderbandes 1 in eine Sinterkammer 22 eingebracht und dort bei Temperaturen um 1400 °C verglast. Die Verglasungsfront schreitet dabei gleichmäßig über die gesamte Schichtbreite von oben nach unten durch die amorphe Kieselsäureschicht 20 fort. Beim Verglasen der amorphen Kieselsäureschicht 20 wird eine Kontraktion in ihrer Längen- und Breitenabmessung durch das Anhaften der Schicht 20 auf der Körnungsschicht 7 vermieden. Durch die thermische Isolierung der Körnungsschicht 7 gegenüber dem Förderband 1 wird ein gleichmäßiges Sintern der amorphen Kieselsäureschicht 20 über die gesamte Schichtbreite erleichtert. Außerdem verhindert die Körnungsschicht 7 ein Anhaften des gesinterten Quarzglasbandes 26 an den Plattenelementen 2. Durch das Sintern entsteht aus der amorphen Kieselsäureschicht 20 ein plattenförmiges Quarzglasband 26 mit einer Dicke von ca. 5 mm, 30 % der ursprünglichen Schichtdicke der amorphen Kieselsäureschicht 20.

Nach dem Verlassen der Sinterkammer 22 werden die Plattenelemente 2 abgesenkt, so daß das Quarzglasband 26 frei wird und über Stützrollen 25 einer Abschneidevorrichtung zugeführt werden kann, wo es in die gewünschten Längen zerteilt wird. Die so hergestellten Quarzglasplatten werden nach dem bekannten Verfahren geschliffen, gereinigt und fertig konfektioniert.

## Patentansprüche

1. Verfahren zur kontinuierlichen Herstellung von Platten aus Quarzglas oder hochkieselsäurehaltigem Glas durch kontinuierliches Aufbringen einer Schicht (20) aus Quarzglas-Soot auf einer Unterlage (7) und Sintern der Schicht (20) durch kontinuierliches Einbringen in eine Erhitzungszone (22) unter Bildung eines Quarzglasbandes (26), dadurch gekennzeichnet, daß als Unterlage (7) eine rieselfähige Quarzglaskörnung (8) eingesetzt wird, die eine geringere Sinteraktivität als der Quarzglas-Soot aufweist.

2. Verfahren nach Anspruch 1, dadurch gekennzeichnet, daß zur kontinuierlichen Herstellung von Platten aus synthetischem Quarzglas oder hochkieselsäurehaltigem Glas eine Schicht (20) aus synthetisch hergestelltem Quarzglas-Soot auf einer Unterlage (7) aus Quarzglaskörnung (8) aus vorgesintertem, synthetischem Quarzglas-Soot hergestellt wird.

3. Verfahren nach Anspruch 1 oder 2, dadurch gekennzeichnet, daß die Quarzglaskörnung (8) die gleiche chemische Zusammensetzung wie der Quarzglas-Soot aufweist.

4. Verfahren nach einem der Ansprüche 1 bis 3, dadurch gekennzeichnet, daß Quarzglaskörnung (8) mit einer mittleren Korngröße im Bereich von 30 µm bis 350 µm eingesetzt wird.

5. Verfahren nach einem der Ansprüche 1 bis 4, dadurch gekennzeichnet, daß das Aufbringen der Schicht (20) mittels Abscheiden des Quarzglas-Soots aus einer Gasphasenreaktion erfolgt.

6. Verfahren nach Anspruch 5, dadurch gekennzeichnet, daß das Aufbringen der Schicht (20) mittels eines oder mehrerer Hydrolysebrenner (14) erfolgt, die über der Unterlage (7) hin- und herbewegt werden.

7. Verfahren nach einem oder mehreren der Ansprüche 1 bis 6, dadurch gekennzeichnet, daß der Quarzglas-Soot während des Aufbringens auf eine Temperatur im Bereich von 1000 °C bis 1250 °C erhitzt wird.

8. Verfahren nach einem oder mehreren der Ansprüche 1 bis 7, dadurch gekennzeichnet, daß die Quarzglaskörnung (8) kontinuierlich auf ein Förderband (1) aufgebracht wird.

9. Verfahren nach einem oder mehreren der Ansprüche 1 bis 10, dadurch gekennzeichnet, daß die Schicht in einer Sinterkammer im Durchlauf bei Temperaturen im Bereich zwischen 1300° C und 1600° C gesintert wird.

10. Verfahren nach einem oder mehreren der Ansprüche 1 bis 9 dadurch gekennzeichnet, daß nach dem Verlassen der Erhitzungszone (22) die Schicht (20) als verglastes Quarzglasband (26) vorliegt, das in plattenförmige Einzelelemente zerteilt wird.

11. Vorrichtung für die kontinuierliche Herstellung von Platten aus Quarzglas oder hochkieselsäurehaltigem Glas, mit einer für den Transport von Quarzglaskörnung geeigneten Transportvorrichtung (1,2,10), mit einer Aufsprühvorrichtung (12,13,14,15) zum Erzeugen einer Schicht (20) aus Quarzglas-Soot auf einer Schicht aus Quarzglaskörnung (8), und mit einer Heizvorrichtung (22,23,24) zum Erhitzen der Schicht (20), dadurch gekennzeichnet, daß eine Aufgabevorrichtung (6) zum schichtweisen Aufbringen der Quarzglaskörnung (8) auf der Transportvorrichtung (1,2,10) vorgesehen ist.

12. Vorrichtung nach Anspruch 11, dadurch gekennzeichnet, daß die Transportvorrichtung (1,2,10) ein Förderband (1) umfaßt, das mit hitzebeständigen Plattenelementen (2) belegt ist.

13. Vorrichtung nach Anspruch 12, dadurch gekennzeichnet, daß benachbarte Plattenelemente (2) derart miteinander verbunden sind, daß sie, abgesehen von einem kleinen Spalt zwischen ihnen, eine geschlossene Fläche (5) bilden.

14. Vorrichtung nach Anspruch 12 oder 13, dadurch gekennzeichnet, daß aneinander grenzende Enden (4) der Plattenelemente (2) hakenförmig ineinander greifen.

15. Vorrichtung nach einem der Ansprüche 12 bis 14, dadurch gekennzeichnet, daß die Plattenelemente (2) aus Aluminiumoxid oder Graphit bestehen.

16. Vorrichtung nach einem oder mehreren der Ansprüche 11 bis 15, dadurch gekennzeichnet, daß die Aufsprühvorrichtung (12,13,14,15) mindestens einen, in mindestens einer Richtung (19) oszillierend bewegbaren Hydrolysebrenner (14) umfaßt.

17. Vorrichtung nach Anspruch 16, dadurch gekennzeichnet, daß der oder die Hydrolysebrenner (14) auf einem oder mehreren Auslegern (13) angeordnet sind, die in einer Richtung (19) quer zur Bewegungsrichtung (11) der Transportvorrichtung (1,2,10) oszillierend bewegbar sind.

18. Vorrichtung nach Anspruch 17, dadurch gekennzeichnet, daß die Ausleger (13) als Zuführung (15) für die Reaktionsgase (16) zu den Hydrolysebrennern (14) dienen.

19. Vorrichtung nach einem oder mehreren der Ansprüche 11 bis 18, dadurch gekennzeichnet, daß die Heizvorrichtung (22,23,24) in Form einer nach unten offenen, sich über die gesamte Breite der Quarzglaspulver-Schicht (20) erstreckenden Sinterkammer (22) ausgebildet ist, die mit einer elektrischen Widerstandsheizung (23) versehen ist.

## Claims

1. Process for the continuous production of sheets from quartz glass or from glass containing a high amount of silica, by continuous application of a layer (20) of quartz glass soot on a base (7) and sintering the layer (20) by continuous introduction into a heating zone (22) with the formation of a quartz glass band (26), characterised in that as base (7) a fluid quartz glass granulation (8) is used, which has a lower sinter activity than the quartz glass soot.

2. Process according to Claim 1, characterised in that for the continuous production of sheets from synthetic quartz glass or from glass containing a high amount of silica, a layer (20) of synthetically produced quartz glass soot is produced on a base (7) of quartz glass granulation (8) of pre-sintered, synthetic quartz glass soot.

3. Process according to Claim 1 or 2, characterised in that the quartz glass granulation (8) has the same chemical composition as the quartz glass soot.

4. Process according to one of Claims 1 to 3, characterised in that quartz glass granulation (8) with a mean grain size in the range of 30 µm to 350 µm is used.

5. Process according to one of Claims 1 to 4, characterised in that the application of the layer (20) takes place by means of separation of the quartz glass soot from a gas phase reaction.

6. Process according to Claim 5, characterised in that the application of the layer (20) takes place by means of one or more hydrolysis burners (14) which are moved back and forth over the base (7).

7. Process according to one or more of Claims 1 to 6, characterised in that during the application, the quartz glass soot is heated to a temperature in the range of 1000 °C to 1250 °C.

8. Process according to one or more of Claims 1 to 7, characterised in that the quartz glass granulation (8) is applied continuously onto a conveyor belt (1).

9. Process according to one or more of Claims 1 to 10, characterised in that the layer is sintered in the passage in a sintering chamber at temperatures in the range between 1300 °C and 1600 °C.

10. Process according to one or more of Claims 1 to 9, characterised in that after leaving the heating zone (22) the layer (20) is present as a vitrified quartz glass band (26), which is separated into sheet-shaped individual elements.

11. Apparatus for the continuous production of sheets from quartz glass or from glass containing a high amount of silica, with a conveying device (1,2,10) suitable for the conveying of quartz glass granulation, with a spraying device (12,13,14,15) for the production of a layer (20) of quartz glass soot on a layer of quartz glass granulation (8), and with a heating device (22,23,24) for heating the layer (20), characterised in that a delivery device (6) is provided for the application of the quartz glass granulation (8) in layers on the conveying device (1,2,10).

12. Apparatus according to Claim 11, characterised in that the conveying device (1,2,10) comprises a conveyor belt (1) which is covered with heat-resistant sheet elements (2).

13. Apparatus according to Claim 12, characterised in that adjacent sheet elements (2) are connected with each other such that, apart from a small gap between them, they form a closed surface (5).

14. Apparatus according to Claim 12 or 13, characterised in that ends (4) of the sheet elements (2), adjacent to each other, engage into each other in a hook form.

15. Apparatus according to one of Claims 12 to 14, characterised in that the sheet elements (2) consist of aluminium oxide or graphite.

16. Apparatus according to one or more of Claims 11 to 15, characterised in that the spraying device (12,13,14,15) comprises at least one hydrolysis burner (14) which is movable in an oscillating manner in at least one direction (19).

17. Apparatus according to Claim 16, characterised in that the hydrolysis burner or burners (14) are arranged on one or more arms (13) which are movable in an oscillating manner in a direction (19) transversely to the direction of movement (11) of the conveying device (1,2,10).

18. Apparatus according to Claim 17, characterised in that the arms (13) serve as a feed (15) for the reaction gases (16) to the hydrolysis burners (14).

19. Apparatus according to one or more of Claims 11 to 18, characterised in that the heating device (22,23,24) is constructed in the form of a downwardly open sintering chamber (22) extending over the entire width of the quartz glass powder layer (20), which chamber (22) is provided with an electric resistance heating (23).

## Revendications

1. Procédé pour la fabrication en continu de plaques en verte de quartz ou en verte hautement siliceux, en déposant en continu une couche (20) de verte de quartz pulvérulent sur un support (7) et en friffant la couche (20) par introduction en continu dans une zone de réchauffement (22) en formant une bande de verte de quartz (26), caractérisé en ce que l'on utilise en tant que support (7) un granulé de verte de quartz coulant (8) qui présente une activité de frittage inférieure à celle du verte de quartz pulvérulent.

2. Procédé selon la revendication 1, caractérisé en ce que pour la production en continu de plaques en verte de quartz synthétique ou en verte hautement siliceux, on produit une couche (20) de verte de quartz pulvérulent réalisée par voie synthétique sur un support (7) de granulé de verte de quartz (8) d'un verte de quartz pulvérulent pré-fritté synthétique.

3. Procédé selon l'une ou l'autre des revendications 1 et 2, caractérisé en ce que le granulé de verte de quartz (8) présente la même composition chimique que le verte de quartz pulvérulent.

4. Procédé selon l'une quelconque des revendications 1 à 3, caractérisé en ce que l'on utilise un granulé de verte de quartz (8) d'une taille de grain moyenne de l'ordre de 30 µm à 350 µm.

5. Procédé selon l'une quelconque des revendications 1 à 4, caractérisé en ce que la déposition de la couche (20) s'effectue par précipitation du verte de quartz pulvérulent depuis une réaction en phase gazeuse.

6. Procédé selon la revendication 5, caractérisé en ce que la déposition de la couche (20) s'effectue au moyen d'un ou de plusieurs brûleurs à hydrolyse (14) qui sont déplacés en va-et-vient au-dessus du support (7).

7. Procédé selon l'une ou plusieurs des revendications 1 à 6, caractérisé en ce que le verte de quartz pulvérulent est réchauffé à une température de l'ordre de 1000°C à 1250°C pendant la déposition.

8. Procédé selon l'une ou plusieurs des revendications 1 à 7, caractérisé en ce que le granulé de verte de quartz (8) est déposé en continu sur une bande de transport (1).

9. Procédé selon l'une ou plusieurs des revendications 1 à 10, caractérisé en ce que la couche est frittée dans une chambre de frittage lors du passage à des températures de l'ordre de 1300°C à 1600°C.

10. Procédé selon l'une ou plusieurs des revendications 1 à 9, caractérisé en ce que qu'après avoir quitté la zone de réchauffement (22), la couche (20) existe sous forme d'une bande de verte de quartz vitrifiée (26) qui est divisée en éléments individuels en forme de plaque.

11. Dispositif pour produire en continu des plaques en verte de quartz ou en verte fortement siliceux, comportant un dispositif de transport (1, 2, 10) approprié pour le transport de granulé de verte de quartz qui présente un dispositif de pulvérisation (12, 13, 14, 15) pour produire une couche (20) de verte de quartz pulvérulent sur une couche de granulé de verte de quartz (8), et comportant un dispositif de réchauffement (22, 23, 24) pour réchauffer la couche (20), caractérisé en ce qu'il est prévu un dispositif distributeur (6) pour la déposition par couche du granulé de verte de quartz (8) sur le dispositif de transport (1, 2, 10).

12. Dispositif selon la revendication 11, caractérisé en ce que le dispositif de transport (1, 2, 10) comporte une bande de transport (1) qui est recouverte d'éléments en plaque (2) résistants à la chaleur.

13. Dispositif selon la revendication 12, caractérisé en ce que des éléments en plaque voisins (2) sont reliés les uns aux autres, de telle sorte qu'ils forment une surface fermée (5), exception faite d'une petite fente entre eux.

14. Dispositif selon l'une ou l'autre des revendications 12 et 13, caractérisé en ce que les extrémités adjacentes (4) des éléments en plaque (2) s'engagent les unes dans les autres à la manière de crochets.

15. Dispositif selon l'une quelconque des revendications 12 à 14, caractérisé en ce que les éléments en plaque (2) sont constitués en oxyde d'aluminium ou en graphite.

16. Dispositif selon l'une ou plusieurs des revendications 11 à 15, caractérisé en ce que le dispositif de pulvérisation (12, 13, 14, 15) comporte au moins un brûleur à hydrolyse (14) mobile en oscillation dans au moins une direction (19).

17. Dispositif selon la revendication 16, caractérisé en ce que le ou les brûleurs à hydrolyse (14) sont agencés sur un ou plusieurs bras (13) qui sont mobiles en oscillation dans une direction (19) transversale à la direction de déplacement (11) du dispositif de transport (1, 2, 10).

18. Dispositif selon la revendication 17, caractérisé en ce que les bras (13) servent d'amenée (15) pour les gaz de réaction (16) aux brûleurs à hydrolyse (14).

19. Dispositif selon l'une ou plusieurs des revendications 11 à 18, caractérisé en ce que le dispositif de réchauffement (22, 23, 24) est réalisé sous forme d'une chambre de frittage (22) ouverte vers le bas qui s'étend sur toute la largeur de la couche de verte de quartz pulvérulent (20) et qui est pourvue d'un chauffage à résistance électrique (23).
